# EUROPÄISCHE PATENTANMELDUNG

(11) **EP 4 095 985 A1**
(43) Veröffentlichungstag der Anmeldung: **30.11.2022**
(21) Anmeldenummer: 22174818.9
(22) Anmeldetag: 23.05.2022
(51) Int. Cl.: H01M 10/613, H01M 10/625, H01M 10/655, H01M 10/6554, H01M 10/6555, H01M 50/204, H01M 50/249

(54) **BATTERIEMODUL FÜR EINE TRAKTIONSBATTERIE EINES ELEKTROFAHRZEUGS, TRAKTIONSBATTERIE FÜR EIN ELEKTROFAHRZEUG UND VERFAHREN ZUM HERSTELLEN EINER SOLCHEN TRAKTIONSBATTERIE**

(30) Priorität: 25.05.2021 DE 102021113416
(71) Anmelder: Lisa Dräxlmaier GmbH, 84137 Vilsbiburg (DE)
(72) Erfinder: Wagner, Peter, 85757 Karlsfeld (DE); Bardosch, Benjamin, 84028 Landshut (DE); Flieser, Michael, 84144 Geisenhausen (DE); Hahn, Alexander, 91341 Röttenbach (DE); Sperl, Thomas, 94405 Landau a. d. Isar (DE); Magunia, Robert, 84144 Geisenhausen (DE)

(57) **Zusammenfassung**

Die vorliegende Erfindung bezieht sich auf ein Batteriemodul (100) für eine Traktionsbatterie (200) eines Elektrofahrzeugs, wobei das Batteriemodul (100) eine Wärmeübertragungsfläche (106) zum Temperieren von Zellen (102) des Batteriemoduls (100) und zumindest eine zwischen Teilflächen (108) der Wärmeübertragungsfläche (106) angeordnete Kavität (110) zum Aufnehmen von überschüssigem Wärmeleitmaterial (204) aufweist.

## Beschreibung

### Technisches Gebiet

Die vorliegende Erfindung betrifft ein Batteriemodul für eine Traktionsbatterie eines Elektrofahrzeugs, eine Traktionsbatterie mit zumindest einem solchen Batteriemodul und ein Verfahren zum Herstellen einer solchen Traktionsbatterie.

### Stand der Technik

Die vorliegende Erfindung wird im Folgenden hauptsächlich in Verbindung mit Traktionsbatterien für Elektrofahrzeuge beschrieben. Die Erfindung kann aber in jedem Akkumulator genutzt werden, in welchem große Wärmemengen zu- oder abgeführt werden sollen.

Eine Traktionsbatterie eines Elektrofahrzeugs ist dazu konfiguriert, elektrische Energie zum Antreiben des Elektrofahrzeugs mit KFZ-Hochvoltspannung zu bevorraten, während des Betriebs für Beschleunigungsvorgänge mit hohen Stromstärken entladen zu werden und für elektrische Bremsvorgänge mit hohen Stromstärken geladen zu werden. Durch die hohen Stromstärken entstehen thermische Verluste, die als Wärme abzuführen sind, um eine Temperatur der Traktionsbatterie innerhalb eines vorgesehenen Betriebsbereichs zu halten. Dazu kann die Traktionsbatterie eine Temperiereinrichtung aufweisen. In der Temperiereinrichtung kann beispielsweise eine Flüssigkeit zum Abtransport der Wärme verwendet werden. Die Temperiereinrichtung kann der Traktionsbatterie auch Wärme zuführen, wenn die Temperatur unterhalb des Betriebsbereichs liegt.

Die Temperiereinrichtung kann beispielsweise als Kühlplatte ausgeführt sein. Wärmeübertragungsflächen von Batteriemodulen der Traktionsbatterie können unter Verwendung von Gap Filler, einem pastösen Wärmeleitmaterial, thermisch mit der Temperiereinrichtung gekoppelt werden. Der Gap Filler wird zwischen die Wärmeübertragungsflächen und die Temperiereinrichtung dosiert. Die Batteriemodule werden in den Gap Filler gedrückt. Dabei verteilt sich der Gap Filler zwischen den Wärmeübertragungsflächen und der Temperiereinrichtung. Hohlräume oder Spalte zwischen der Temperiereinrichtung und den Wärmeübertragungsflächen werden aufgefüllt. Eine tatsächliche Kontaktfläche zwischen der Temperiereinrichtung und den Batteriemodulen wird maximiert. Der Gap Filler vernetzt nach dem Abdrücken, kann aber auch im ausgehärteten Zustand elastische Eigenschaften behalten. Der Gapfiller kann auch seine pastöse Eigenschaft beibehalten.

### Beschreibung der Erfindung

Eine Aufgabe der Erfindung ist es daher, unter Einsatz konstruktiv möglichst einfacher Mittel ein verbessertes Batteriemodul für eine Traktionsbatterie eines Elektrofahrzeugs, eine verbesserte Traktionsbatterie mit zumindest einem solchen Batteriemodul und ein verbessertes Verfahren zum Herstellen einer solchen Traktionsbatterie bereitzustellen. Eine Verbesserung kann hierbei beispielsweise eine verringerte Setzkraft beim Abdrücken betreffen.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben. Insbesondere können die unabhängigen Ansprüche einer Anspruchskategorie auch analog zu den abhängigen Ansprüchen einer anderen Anspruchskategorie weitergebildet sein.

Pastöses Wärmeleitmaterial kann als Gap Filler bezeichnet werden. Das Wärmeleitmaterial weist in verarbeitungsfähigem Zustand aufgrund eines hohen Gehalts an insbesondere keramischen Partikeln eine pastenartige Konsistenz auf. Ohne von außen ausgeübten Druck auf das pastöse Wärmeleitmaterial tropft oder fließt das Wärmeleitmaterial nicht. Wenn Druck ausgeübt wird, weicht das Wärmeleitmaterial aus und fließt in Richtung eines niedrigeren Drucks. Aufgrund der pastenartigen Konsistenz erhöht sich ein Fließwiderstand des Wärmeleitmaterials mit abnehmender Schichtdicke stark. Zwischen zwei Oberflächen kann dabei ein auf die Oberflächen wirkender hoher statischer Druck entstehen. Der Druck kann die Oberflächen verformen. Der Druck kann dabei umso größer sein, je größer eine zusammenhängende Kontaktfläche zwischen den Oberflächen ist.

Bei dem hier vorgestellten Ansatz ist zumindest eine der beteiligten Oberflächen in Teilflächen unterteilt, zwischen denen Kavitäten angeordnet sind. Die Kavitäten unterbrechen also die zusammenhängende Kontaktfläche und ermöglichen so kurze Fließstrecken des Wärmeleitmaterials. Durch die kurzen Fließstrecken kann der statische Druck begrenzt werden. Überschüssiges Wärmeleitmaterial kann in die Kavitäten abfließen.

Es wird ein Batteriemodul für eine Traktionsbatterie eines Elektrofahrzeugs vorgeschlagen, wobei das Batteriemodul eine Wärmeübertragungsfläche zum Temperieren von Zellen des Batteriemoduls und zumindest eine zwischen Teilflächen der Wärmeübertragungsfläche angeordnete Kavität zum Aufnehmen von beim Verarbeiten pastösen, überschüssigem Wärmeleitmaterial aufweist. Das Batteriemodul kann aus einer oder mehreren Zellen bestehen.

Weiterhin wird ein Traktionsbatterie für ein Elektrofahrzeug vorgeschlagen, wobei die Traktionsbatterie eine Temperiereinrichtung und zumindest ein Batteriemodul gemäß dem hier vorgeschlagenen Ansatz aufweist, wobei das Batteriemodul unter Verwendung eines beim Verarbeiten pastösen Wärmeleitmaterials thermisch mit der Temperiereinrichtung gekoppelt ist, wobei überschüssiges Wärmeleitmaterial aus einem Kontaktbereich zwischen den Teilflächen der Wärmeübertragungsfläche des Batteriemoduls und der Temperiereinrichtung in die zumindest eine Kavität des Batteriemoduls verlagert ist.

Weiterhin wird ein Verfahren zum Herstellen einer Traktionsbatterie gemäß dem hier vorgestellten Ansatz vorgeschlagen, wobei pastöses Wärmeleitmaterial in einen Kontaktbereich zwischen Teilflächen einer Wärmeübertragungsfläche zumindest eines Batteriemoduls gemäß dem hier vorgestellten Ansatz und einer Temperiereinrichtung dosiert wird, wobei die Wärmeübertragungsfläche auf die Temperiereinrichtung aufgesetzt wird und mit einer Setzkraft gegen die Temperiereinrichtung gepresst wird, wobei das Wärmeleitmaterial aus dem Kontaktbereich zumindest teilweise in die zumindest eine Kavität des Batteriemoduls verdrängt wird.

Unter einer Traktionsbatterie kann ein Energiespeicher für ein elektrisch angetriebenes Fahrzeug verstanden werden. Die Traktionsbatterie kann ein Gehäuse aufweisen, das Komponenten der Traktionsbatterie umschließt und vor mechanischen Einflüssen und Umwelteinflüssen schützt. Das Gehäuse kann innenliegende Versteifungselemente aufweisen. Die Traktionsbatterie kann modular aufgebaut sein. Die Traktionsbatterie kann beispielsweise an einer Bodengruppe des Fahrzeugs befestigt sein.

Eine Temperiereinrichtung kann Bestandteil des Gehäuses sein. Die Temperiereinrichtung kann insbesondere in einen Boden der Traktionsbatterie integriert sein. Die Temperiereinrichtung kann als Kühlplatte bezeichnet werden. Die Temperiereinrichtung kann ein Wärmetauscher zum Zuführen und Abführen von Wärmeenergie sein. Die Temperiereinrichtung kann ein Fluid für den Wärmetransport enthalten. Insbesondere kann die Temperiereinrichtung eine Wärmetransportflüssigkeit enthalten. Die Temperiereinrichtung kann durch eine Klimaanlage des Fahrzeugs versorgt werden.

Die Traktionsbatterie kann mehrere Batteriemodule aufweisen. Die Batteriemodule können zwischen den Versteifungselementen der Traktionsbatterie angeordnet werden. Ein Batteriemodul kann mehrere Zellen beziehungsweise Batteriezellen zusammenfassen. Die Zellen können innerhalb des Batteriemoduls elektrisch verschaltet sein. Das Batteriemodul kann ebenso ein Gehäuse aufweisen, das die Zellen umschließt. Die Batteriemodule können innerhalb der Traktionsbatterie elektrisch verschaltet sein.

Das Batteriemodul kann zumindest eine Wärmeübertragungsfläche aufweisen, die thermisch mit den Zellen gekoppelt ist. Die Wärmeübertragungsfläche kann insbesondere eine Bodenfläche des Batteriemoduls sein. Beispielsweise kann die Wärmeübertragungsfläche über zwischen den Zellen angeordnete Wärmeleitbleche mit den Zellen gekoppelt sein. Die Wärmeübertragungsfläche wird bei der Herstellung der Traktionsbatterie unter Verwendung von pastösem Wärmeleitmaterial thermisch mit der Temperiereinrichtung gekoppelt. Das Wärmeleitmaterial wird in dem pastösen beziehungsweise pastenartigen Zustand verarbeitet und kann nach dem Verarbeiten vernetzen beziehungsweise aushärten. Das pastöse Wärmeleitmaterial kann als Gap Filler bezeichnet werden. Das pastöse Wärmeleitmaterial kann einen geringen Wärmewiderstand aufweisen. Das Wärmeleitmaterial kann elektrisch isolierend sein. Das Wärmeleitmaterial kann einen keramischen Füllstoff aufweisen. Das pastöse Wärmeleitmaterial kann unter Druckeinwirkung flüssigkeitsähnliche Eigenschaften aufweisen, d.h. fließfähig sein.

Bei der Herstellung der Traktionsbatterie wird das pastöse Wärmeleitmaterial in einem Kontaktbereich auf die Wärmeübertragungsfläche und/oder die Temperiereinrichtung dosiert. Anschließend wird die Wärmeübertragungsfläche auf die Temperiereinrichtung aufgesetzt und mit einer Setzkraft in das Wärmeleitmaterial gepresst. Das zwischen der Wärmeübertragungsfläche und der Temperiereinrichtung befindliche Wärmeleitmaterial kann dabei zumindest anteilig seitlich verdrängt werden. Dabei gleicht das Wärmeleitmaterial beim Fließen Fertigungstoleranzen des Batteriemoduls und der Temperiereinrichtung aus. Weiterhin füllt das Wärmeleitmaterial eine Hohlräume der Wärmeübertragungsfläche und einer Oberfläche der Temperiereinrichtung. Dadurch kann die Wärmeübertragungsfläche vollflächig an dem Wärmeleitmaterial anliegen. Das Wärmeleitmaterial kann wiederum vollflächig an der Temperiereinrichtung anliegen. Überschüssiges Wärmeleitmaterial quillt seitlich aus dem Kontaktbereich heraus.

Bei dem hier vorgestellten Ansatz ist die Wärmeübertragungsfläche in zumindest zwei Teilflächen unterteilt. Damit ist auch der Kontaktbereich unterteilt. Zwischen den Teilflächen weist das Batteriemodul zumindest eine Kavität auf. Eine Kavität kann als Hohlraum oder Aussparung bezeichnet werden. Die Kavität kann ein Rücksprung in der Wärmeübertragungsfläche sein. Eine Breite der Kavität kann kleiner sein als Breiten der angrenzenden Teilflächen der Wärmeübertragungsfläche. Eine Tiefe der Kavität kann kleiner, gleich oder größer als die Breite der Kavität sein. Die Kavität ermöglicht verkürzte Fließwege für das verdrängte Wärmeleitmaterial. Das überschüssige Wärmeleitmaterial kann aus dem Kontaktbereich heraus in die Kavität hinein verdrängt werden. Durch den verkürzten Fließweg kann die Setzkraft reduziert werden. So baut sich zwischen der Wärmeübertragungsfläche und der Temperiereinrichtung ein reduzierter statischer Druck auf und einer Verformung der Temperiereinrichtung kann vorgebeugt werden. Nach dem Anpressen des Batteriemoduls an die Temperiereinrichtung kann das Wärmeleitmaterial aushärten. Das ausgehärtete Wärmeleitmaterial kann flexibel bleiben.

Das Batteriemodul kann auch mehrere Kavitäten aufweisen. Die Kavitäten können regelmäßig, insbesondere äquidistant, über die Wärmeübertragungsfläche verteilt angeordnet sein. Beispielsweise können die Kavitäten jeweils bis zu 80 Millimeter voneinander beabstandet sein. Anders ausgedrückt können die Kavitäten entlang der Wärmeübertragungsfläche derart verteilt angeordnet sein, dass ein maximaler lateraler Abstand zwischen nächstbenachbarten Kavitäten kleiner oder gleich 80 mm, vorzugsweise kleiner oder gleich 50 mm, vorzugsweise kleiner oder gleich 35 mm, ist. Dadurch ergibt sich ein maximaler Fließweg von 25 Millimetern bis zur nächstliegenden Kavität.

Zumindest eine Kavität kann als Tasche in der Wärmeübertragungsfläche ausgebildet sein. Eine Tasche kann eine örtliche Ausnehmung, insbesondere eine in zwei zueinander quer verlaufenden Richtungen begrenzte Ausnehmung, sein. Laterale Abmessungen der Taschen können beispielsweise kleiner sein als Abstände zwischen nächstbenachbarten Taschen. Die Teilflächen können die zumindest eine Kavität umgeben. Die Wärmeübertragungsfläche kann als durchgehendes Wärmeübertragungsblech ausgebildet sein. Das Wärmeübertragungsblech kann im Bereich der Kavität dreidimensional verformt sein.

Alternativ kann zumindest eine Kavität zwischen je zwei Rippen der Wärmeübertragungsfläche angeordnet sein. Die Teilflächen der Wärmeübertragungsfläche können auf den Rippen angeordnet sein. Die Kavität kann ein Kanal zwischen den Rippen sein. Der Kanal kann bis zu einer Begrenzung der Wärmeübertragungsfläche reichen. Durch den Kanal kann beim Aufsetzen des Batteriemoduls auf die Temperiereinrichtung eingeschlossene Luft einfach seitlich entweichen. Beim Pressen mit der Setzkraft kann dann das überschüssige Wärmeleitmaterial durch den Kanal seitlich entweichen

Die Teilflächen können durch außerhalb von Zwischenräumen zwischen den Zellen angeordneten Endbereichen von in den Zwischenräumen angeordneten Wärmeleitblechen des Batteriemoduls ausgebildet sein. Ein Wärmeleitblech kann im Wesentlichen flach/eben sein. An beiden Seiten des Wärmeleitblechs kann je eine Zelle anliegen. Die Zellen können beispielsweise Li-Ion Zellen sein. Die Zellen können unterschiedliche Bauformen aufweisen. Insbesondere können die Zellen Pouchzellen oder prismatische Zellen sein.

Die Endbereiche können quer zu einer Haupterstreckungsebene der Wärmeleitbleche gebogen sein. Damit kann die Wärmeübertragungsfläche im Wesentlichen senkrecht zu den Wärmeleitblechen ausgerichtet sein. Ein Endbereich kann dabei im Wesentlichen so breit sein, wie eine der an das Wärmeleitblech angrenzenden Zellen.

Die Endbereiche können geschlitzt ausgeführt sein. Die Endbereiche können in viele Teilflächen unterteilt sein. Durch Schlitze kann jede Teilfläche individuell in das Wärmeleitmaterial gepresst werden. Die Teilfläche kann sich entsprechend dem sich einstellenden statischen Druck elastisch und/oder plastisch verformen. Mit anderen Worten können sich die Teilflächen einer Kontur der Temperiereinrichtung anpassen.

Je zwei benachbarte Endbereiche können eine Rippe ausbilden. Die Endbereiche können insbesondere aufeinander zu gebogen sein. Dabei kann ein Endbereich beispielsweise 20 Millimeter breit sein. Die resultierende Rippe kann beispielsweise 50 Millimeter oder weniger breit sein, da sich die Endbereiche in der Mitte der Rippe nicht berühren.

Die Teilflächen können in einem spitzen Winkel, beispielsweise einem Winkel von weniger als 70°, vorzugsweise weniger als 50° oder weniger als 30°, zu einer Bezugsebene der Wärmeübertragungsfläche ausgerichtet sein. Insbesondere können die Teilflächen in Richtung der Kavität geneigt ausgerichtet sein. Durch den spitzen Winkel kann eine Fließrichtung des Wärmeleitmaterials vorgegeben werden. Wenn der spitze Winkel in Richtung der Kavität verläuft, fließt das überschüssige Wärmeleitmaterial in Richtung der Kavität. Durch eine eindeutige Fließrichtung können Lufteinschlüsse verhindert werden. Der spitze Winkel reduziert zusätzlich den Fließwiderstand des Wärmeleitmaterials.

### Kurze Figurenbeschreibung

Nachfolgend wird ein vorteilhaftes Ausführungsbeispiel der Erfindung unter Bezugnahme auf die begleitenden Figuren erläutert. Es zeigt:
Fig. 1 eine Darstellung eines Batteriemoduls gemäß einem Ausführungsbeispiel; und
Fig. 2 eine Schnittdarstellung einer Traktionsbatterie gemäß einem Ausführungsbeispiel.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

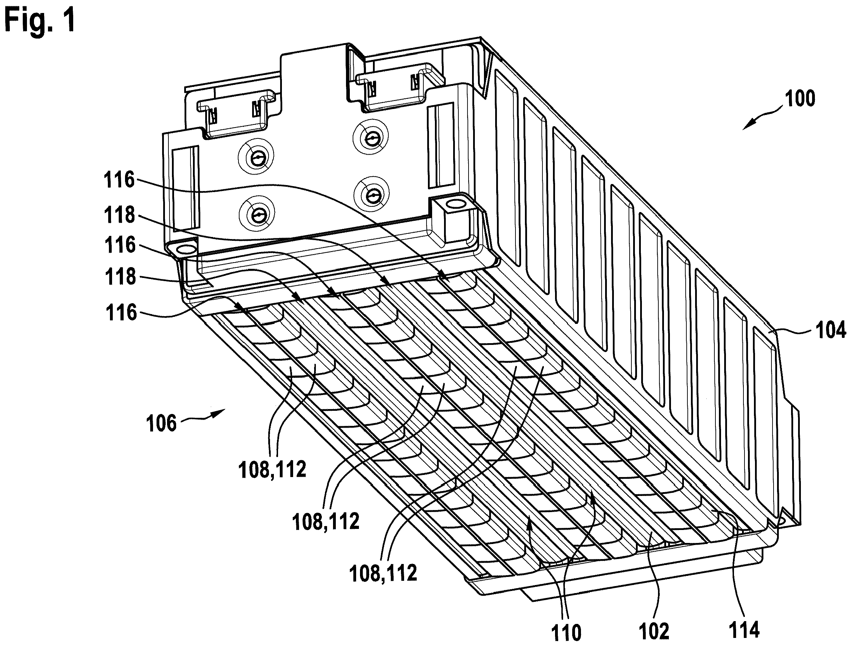

Fig. 1 zeigt eine Darstellung eines Batteriemoduls 100 gemäß einem Ausführungsbeispiel. Mehrere solche Batteriemodule 100 können in einer Traktionsbatterie eines Elektrofahrzeugs parallel und/oder in Reihe verschaltet werden. Dazu werden die einzelnen Batteriemodule 100 in ein Gehäuse beziehungsweise einen Rahmen der Traktionsbatterie eingesetzt und elektrisch miteinander verbunden. Zum Temperieren der Batteriemodule 100 weist die Traktionsbatterie eine Temperiereinrichtung auf, die beispielsweise in einem Boden des Gehäuses angeordnet sein kann oder den Boden der Traktionsbatterie ausbilden kann. Die Batteriemodule 100 werden unter Verwendung eines Wärmeleitmaterials thermisch mit der Temperiereinrichtung gekoppelt. Die Temperiereinrichtung kann insbesondere dazu verwendet werden, die Batteriemodule 100 zu kühlen. Bei niedrigen Temperaturen kann die Temperiereinrichtung auch dazu verwendet werden, die Batteriemodule 100 zu heizen.

Das Batteriemodul 100 weist mehrere Pouchzellen oder prismatische Zellen 102 auf. Die Zellen 102 sind Flachseite an Flachseite nebeneinander innerhalb eines Gehäuses 104 des Batteriemoduls 100 angeordnet. Die Flachseiten der Zellen 102 sind senkrecht zu einer Wärmeübertragungsfläche 106 des Batteriemoduls 100 ausgerichtet. Die Wärmeübertragungsfläche 106 ist damit hier an einem Boden des Gehäuses 104 angeordnet. Über die Wärmeübertragungsfläche 106 kann das Batteriemodul mit der Temperiereinrichtung der Traktionsbatterie gekoppelt werden.

Alternativ können die Zellen 102 auch liegend übereinandergestapelt sein. Dann kann das Batteriemodul 100 zumindest eine seitliche Wärmeübertragungsfläche 106 aufweisen. Je nach Gestaltung der Temperiereinrichtung kann das Batteriemodul 100 auch mehrere Wärmeübertragungsflächen 106 aufweisen.

Die Wärmeübertragungsfläche 106 ist bei dem hier vorgestellten Ansatz in mehrere Teilflächen 108 unterteilt. Die Teilflächen 108 definieren einen Kontaktbereich zu der Temperiereinrichtung. Zwischen den Teilflächen 108 sind Kavitäten 110 angeordnet. Die Kavitäten 110 sind Rücksprünge hinter eine Haupterstreckungsebene der Wärmeübertragungsfläche 106. Die Kavitäten 110 unterbrechen den Kontaktbereich. Die Kavitäten 110 sind dazu ausgebildet, beim Zusammenbau der Traktionsbatterie überschüssiges Wärmeleitmaterial aufzunehmen, das zur thermischen Anbindung des Batteriemoduls 100 an die Temperiereinrichtung zwischen den Teilflächen 108 und der Temperiereinrichtung angeordnet wird.

Das Wärmeleitmaterial ist zumindest während des Zusammenbaus der Traktionsbatterie pastös, die einen Spalt zwischen den Teilflächen 108 und einer Oberfläche der Temperiereinrichtung vollständig ausfüllt, wenn das Batteriemodul 100 auf die Temperiereinrichtung aufgesetzt wird und mit einer Setzkraft gegen die Temperiereinrichtung gedrückt wird. Beim Andrücken fließt die Paste entlang des Spalts und überschüssiges Wärmeleitmaterial kann aus dem Spalt in die angrenzende Kavität quellen.

Durch die in die Teilflächen 108 unterteilte Wärmeübertragungsfläche 106 ergeben sich kurze Fließwege bis zur nächsten Kavität 110. Aufgrund der kurzen Fließwege baut sich beim Anpressen des Batteriemoduls 100 an die Temperiereinrichtung nur ein geringer Druck innerhalb des pastösen Wärmeleitmaterials zwischen der Temperiereinrichtung und den Teilflächen 108 auf. Durch den geringen Druck ist eine geringe Setzkraft zum Abdrücken des Batteriemoduls 100 erforderlich. Die Temperiereinrichtung wird durch die geringe Setzkraft nur wenig belastet.

Hier ist das Gehäuse 104 an der Wärmeübertragungsfläche 106 offen und die Teilflächen 108 sind durch abgekantete Endbereiche 112 von zwischen den Zellen 102 angeordneten Wärmeleitblechen 114 ausgebildet. Dabei sind die Wärmeleitbleche 114 zwischen jeder zweiten Zelle 102 angeordnet und die Endbereiche 112 benachbarter Wärmeleitbleche 114 in entgegengesetzte Richtungen gebogen. Dadurch bilden je zwei der zwischen den Zellen herausragenden Endbereiche 112 Rippen 116 aus, zwischen denen die Kavitäten 110 angeordnet sind. In den Kavitäten 110 liegen die Zellen 102 frei. Die Kavitäten 110 bilden Kanäle 118 zwischen den Rippen 116 aus. Die Kanäle 118 führen bis an den Rand der Wärmeübertragungsfläche 106. Durch die Kanäle 118 kann zwischen dem Batteriemodul 100 und der Temperiereinrichtung eingeschlossene Luft seitlich entweichen.

In einem alternativen Ausführungsbeispiel ist das Gehäuse 104 an der Wärmeübertragungsfläche 106 geschlossen ausgeführt und die Wärmeübertragungsfläche 106 eine durchgehende Seite des Gehäuses 104. Die Teilflächen 108 hängen zusammen und die Kavitäten 110 sind als Vertiefungen in der Wärmeübertragungsfläche 106 ausgebildet. Die Vertiefungen können als Taschen bezeichnet werden.

In einem Ausführungsbeispiel sind die Endbereiche 112 der Wärmeleitbleche 114 geschlitzt ausgeführt. Dadurch bildet jeder Endbereich 112 eine Mehrzahl von Teilflächen 108 aus. Die einzelnen Teilflächen 108 können sich so beim Abdrücken individuell verformen, ohne die benachbarten Teilflächen 108 zu beeinflussen.

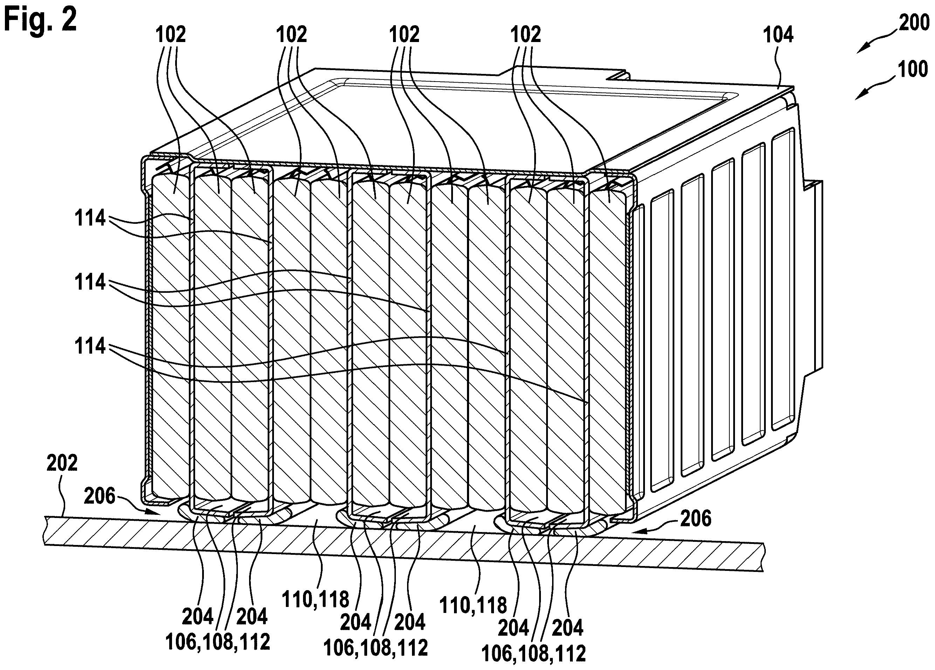

Fig. 2 zeigt eine Schnittdarstellung eines Ausschnitts einer Traktionsbatterie 200 gemäß einem Ausführungsbeispiel. Die Traktionsbatterie 200 weist eine Temperiereinrichtung 202 und zumindest ein Batteriemodul 100 auf. Das Batteriemodul 100 entspricht dabei im Wesentlichen dem Batteriemodul in Fig. 1. Das Batteriemodul 100 ist unter Verwendung von Wärmeleitmaterial 204 thermisch mit der Temperiereinrichtung 202 gekoppelt. Das Wärmeleitmaterial 204 überbrückt Spalte 206 zwischen den Teilflächen 108 der Wärmeübertragungsfläche 106 und der Temperiereinrichtung 202. Überschüssiges Wärmeleitmaterial 204 ist seitlich aus den Spalten 206 in die zwischen den Teilflächen 108 liegenden Kavitäten 110 verdrängt worden.

In einem Ausführungsbeispiel sind die Teilflächen 108 leicht schräg zu der Oberfläche der Temperiereinrichtung 202 ausgerichtet. Dadurch laufen die Spalte 206 von der angrenzenden Kavität 110 spitz zu. Durch den spitzen Winkel der Spalte 206 ist die seitliche Verdrängung des Wärmeleitmaterials 204 in die Kavitäten 110 vereinfacht worden, da die breiteste Stelle der Spalte 206 direkt an die jeweilige Kavität 110 angrenzt.

Mit anderen Worten wird eine fließwegeoptimierte Bodenstruktur eines Batteriemoduls vorgestellt.

Beim Setzen von Zellmodulen in ein Batteriegehäuse wird zur homogenen thermischen Anbindung an einen Kühlbereich (z.B. Kühlplatte) ein Gapfiller verwendet. Dieses pastöse Material wird auf der Anbindungsfläche aufgetragen und dann beim Setzen der Module verpresst. Damit der Gapfiller gleichmäßig verfließen kann und der Überschuss bis zu den Seitenrändern des Moduls verdrängt werden kann, werden die Module bisher mit sehr hohen Setzkräften in den Batterierahmen eingebracht, was zur Deformation beziehungsweise unerwünschten Verformungen der Bauteile führen kann. Daher werden bisher zusätzliche Montagehilfen zum Gegenhalten verwendet, um die Setzkräfte aufzunehmen. Weiterhin ist bisher eine lange Haltekraft nötig, damit der Gapfiller die langen Fließstrecken überwinden kann.

Bei dem hier vorgestellten Ansatz werden an der thermischen Kontaktfläche Kavitäten vorgesehen, die beim Setzen überschüssigen Gapfiller aufnehmen können, so sehr kurze Fließwege ermöglichen und die Setzkräfte stark reduzieren. Weiterhin kann durch die kurzen Fließwege schneller gesetzt werden und so die Taktzeit verkürzt werden.

Das hier vorgestellte Zellmodul weist an der thermischen Anbindungsfläche Kavitäten auf, in die der Gapfiller beim Setzen teilweise verdrängt wird. Die Kavitäten können durch eine Rippenstruktur ausgebildet sein. Alternativ können die Kavitäten als Taschen ausgebildet sein. Die Kavitäten können so angeordnet sein, dass der Fließweg des Gapfillers auf höchstens 50 mm reduziert wird. Insbesondere können die Kavitäten so angeordnet sein, dass der Fließweg des Gapfillers auf höchstens 20 mm reduziert wird. Das Zellmodul kann Pouchzellen oder prismatische Zellen aufweisen. Die Zellen können Lithium-Zellen für ein Fahrzeug sein. Die die Bodenstruktur kann durch die Wärmeleitbleche ausgebildet werden.

### BEZUGSZEICHENLISTE

- 100: Batteriemodul
- 102: Zelle
- 104: Gehäuse
- 106: Wärmeübertragungsfläche
- 108: Teilfläche
- 110: Kavität
- 112: Endbereich
- 114: Wärmeleitblech
- 116: Rippe
- 118: Kanal

- 200: Traktionsbatterie
- 202: Temperiereinrichtung
- 204: Wärmeleitmaterial
- 206: Spalt

## Patentansprüche

1. Batteriemodul (100) für eine Traktionsbatterie (200) eines Elektrofahrzeugs, wobei das Batteriemodul (100) zumindest eine Wärmeübertragungsfläche (106) zum Temperieren von Zellen (102) des Batteriemoduls (100) und zumindest eine zwischen Teilflächen (108) der Wärmeübertragungsfläche (106) angeordnete Kavität (110) zum Aufnehmen von überschüssigem Wärmeleitmaterial (204) aufweist.

2. Batteriemodul (100) gemäß Anspruch 1, bei dem die Kavität (110) als Tasche in der Wärmeübertragungsfläche (106) ausgebildet ist und die Teilflächen (108) die Kavität (110) umgeben.

3. Batteriemodul (100) gemäß Anspruch 1, bei dem die Kavität (110) zwischen zwei Rippen (116) der Wärmeübertragungsfläche (106) angeordnet ist, wobei die Teilflächen (108) auf den Rippen (116) angeordnet sind.

4. Batteriemodul (100) gemäß einem der vorhergehenden Ansprüche, bei dem die Teilflächen (108) durch außerhalb von Zwischenräumen zwischen den Zellen (102) angeordneten Endbereichen (112) von in den Zwischenräumen angeordneten Wärmeleitblechen (114) des Batteriemoduls (100) ausgebildet sind.

5. Batteriemodul (100) gemäß Anspruch 4, bei dem die Endbereiche (112) quer zu einer Haupterstreckungsebene der Wärmeleitbleche (114) gebogen sind.

6. Batteriemodul (100) gemäß einem der Ansprüche 4 bis 5, bei dem die Endbereiche (112) geschlitzt ausgeführt sind.

7. Batteriemodul (100) gemäß einem der Ansprüche 4 bis 6, bei dem je zwei benachbarte Endbereiche (112) eine Rippe (116) ausbilden.

8. Batteriemodul (100) gemäß einem der vorhergehenden Ansprüche, bei dem die Teilflächen (108) in einem spitzen Winkel zu einer Bezugsebene der Wärmeübertragungsfläche (106) ausgerichtet sind.

9. Traktionsbatterie (200) für ein Elektrofahrzeug, wobei die Traktionsbatterie (200) eine Temperiereinrichtung (202) und zumindest ein Batteriemodul (100) gemäß einem der Ansprüche 1 bis 8 aufweist, wobei das Batteriemodul (100) unter Verwendung eines Wärmeleitmaterials (204) thermisch mit der Temperiereinrichtung (202) gekoppelt ist, wobei überschüssiges Wärmeleitmaterial (204) aus einem Kontaktbereich zwischen den Teilflächen (108) der Wärmeübertragungsfläche (106) des Batteriemoduls (100) und der Temperiereinrichtung (202) in die zumindest eine Kavität (110) des Batteriemoduls (100) verdrängt ist.

10. Verfahren zum Herstellen einer Traktionsbatterie (200) gemäß Anspruch 9, wobei pastöses Wärmeleitmaterial (204) in einen Kontaktbereich zwischen Teilflächen (108) einer Wärmeübertragungsfläche (106) zumindest eines Batteriemoduls (100) gemäß einem der Ansprüche 1 bis 8 und einer Temperiereinrichtung (202) dosiert wird, wobei die Wärmeübertragungsfläche (106) auf die Temperiereinrichtung (202) aufgesetzt wird und mit einer Setzkraft gegen die Temperiereinrichtung (202) gepresst wird, wobei das Wärmeleitmaterial (204) aus dem Kontaktbereich zumindest teilweise in die zumindest eine Kavität (110) des Batteriemoduls (100) verdrängt wird.
